Europäisches Patentamt

European Patent Office

Office européen des brevets

(19)

(11) EP 0 599 737 B1

(12) **FASCICULE DE BREVET EUROPEEN**

(45) Date de publication et mention
de la délivrance du brevet:
**17.09.1997 Bulletin 1997/38**

(51) Int. Cl.⁶: **B23K 9/04**, B23K 10/02

(21) Numéro de dépôt: **93402860.6**

(22) Date de dépôt: **25.11.1993**

(54) **Procédé de rechargement d'une pièce au moyen d'un plasma à arc transféré**

Verfahren zum Auftragschweissen an einem Werkstück mittels Plasma mit übertragenem Lichtbogen

Build-up procedure on a work piece by plasma with transferred arc

(84) Etats contractants désignés:
**AT BE CH DE ES FR GB IT LI LU NL PT SE**

(30) Priorité: **27.11.1992 FR 9214310**

(43) Date de publication de la demande:
**01.06.1994 Bulletin 1994/22**

(73) Titulaire:
**SOCIETE NOUVELLE DE METALLISATION INDU
STRIES SNMI
F-84093 Avignon Cédex 09 (FR)**

(72) Inventeurs:
• **Proner, Alain
F-30126 Lirac (FR)**
• **Ducos, Maurice
F-84550 Mornas (FR)**
• **Dacquet, J. Philippe
F-84500 Bollene (FR)**

(74) Mandataire: **Des Termes, Monique
Société Brevatome
25, rue de Ponthieu
75008 Paris (FR)**

(56) Documents cités:
• **PATENT ABSTRACTS OF JAPAN vol. 11, no. 250
(M-616) (2697) 14 Août 1987 & JP-A-62 057 770
(DAIDO STEEL CO LTD) 13 Mars 1987**

## Description

La présente invention a pour objet un procédé de rechargement d'une pièce métallique par dépôt d'un matériau en utilisant la technique du plasma à arc transféré.

Elle s'applique en particulier au rechargement de pièces telles que des soupapes de moteurs à combustion interne.

La technique de rechargement consiste à réaliser des dépôts relativement épais d'un matériau sur un substrat pour conférer à celui-ci les qualités propres au matériau déposé.

Selon cette technique, on établit entre le substrat et le matériau déposé une liaison métallurgique par soudage, ce qui rend nécessaire un chauffage du substrat pour fondre la surface de celui-ci lors de l'amenée du matériau de revêtement à l'état fondu.

Il en résulte dans le substrat l'apparition d'une zone affectée thermiquement au voisinage du dépôt et une dilution du substrat dans le matériau déposé.

Des rechargements de ce type peuvent être effectués à l'aide de matériels de soudage conventionnels tels que des torches oxyacétyléniques, et des matériels utilisant un arc électrique comme les torches TIG (Tungsten Inert Gas), les torches MIG (Metal Inert Gas) et les plasmas à arc transféré (PTA). Ces matériels de soudage sont alimentés de façon continue ou discontinue en matériau d'apport, sous la forme de poudres, de baguettes ou de fils.

Lorsqu'on utilise la technique du plasma à arc transféré (PTA), l'arc transféré constitue l'élément de chauffage du matériau de rechargement et de la surface de la pièce constituant le substrat. La pièce à traiter est portée à un potentiel positif par rapport à la cathode de la torche et le jet de plasma est alors entièrement parcouru par le courant électrique entre la torche et le substrat, transmettant à celui-ci l'énergie nécessaire à l'échauffement et à la fusion localisée de la zone à recharger. Le matériau d'apport est fondu à la surface de la pièce pour former un bain liquide qui est sans cesse renouvelé au fur et à mesure du déplacement de la pièce sous la torche. La fusion superficielle du substrat permet une liaison métallurgique identique à celle rencontrée dans les procédés de soudage.

Avec les appareillages classiques utilisés actuellement, dont les tuyères ont un diamètre de 2,5 à 4,5mm, on dépose le matériau sous la forme d'un cordon de soudure en déplaçant la pièce par rapport à la torche à une vitesse relative torche-pièce allant de 0,08m/min à 1,10m/min, et en utilisant des densités de courant moyennes de 5 à 12 A/mm$^2$ au niveau des tuyères.

Avec de telles énergies, dans le cas de pièces de petites dimensions telles que les soupapes, il est nécessaire de refroidir la pièce pendant le dépôt pour éviter une modification de ses propriétés en raison de l'échauffement. Ce refroidissement est effectué généralement en disposant la pièce sur un support refroidi intérieurement par une circulation d'eau.

Par ces techniques, on obtient généralement des cordons de soudure ayant un profil arrondi, c'est-à-dire présentant une surépaisseur de matériau déposé, et des taux de dilution moyens relativement élevés, par exemple de l'ordre de 8 à 12%.

La présente invention a précisément pour objet un procédé de rechargement utilisant la technique du plasma à arc transféré, qui permet de limiter la surépaisseur déposée, d'éviter le refroidissement de la pièce au cours du dépôt et de limiter le taux de dilution.

Selon l'invention, le procédé de rechargement d'une pièce métallique par dépôt d'un matériau au moyen d'un plasma à arc transféré, consiste à déposer sur la pièce à recharger plusieurs cordons de soudure dudit matériau juxtaposés avec recouvrement partiel des cordons ou un cordon en spirale dudit matériau avec recouvrement partiel des spires pour former sur la pièce un dépôt de largeur voulue, le dépôt étant effectué uniquement au moyen du plasma à arc transféré, en déplaçant le plasma par rapport à la pièce à une vitesse de 1,5 à 50 m/min et en utilisant une puissance du plasma telle qu'on fonde la surface de la pièce sur une épaisseur au plus égale à 0,5 mm et que le grossissement des grains dans la zone fondue n'excède pas 10%, sans refroidir la pièce au cours du rechargement.

Dans ce procédé, l'emploi d'un déplacement relatif de la pièce par rapport au plasma très rapide permet de mieux utiliser la puissance du plasma en limitant la zone affectée thermiquement, d'éviter ainsi un grossissement des grains dans la zone affectée thermiquement et de dissiper facilement l'énergie du chauffage sans qu'il soit nécessaire de refroidir la pièce au cours du rechargement.

Selon l'invention, la vitesse de déplacement v du plasma par rapport à la pièce est choisie en fonction de la nature du matériau constituant la pièce, de l'épaisseur fondue p lors de l'opération de rechargement et du diamètre d du spot du plasma sur la pièce.

Cette vitesse $\underline{v}$ correspond à la formule :

$$v = \frac{d}{5p^2} \times \frac{\lambda}{\rho C_p}$$

dans laquelle

d est le diamètre du spot,
p est l'épaisseur fondue dans la pièce
$\rho$ est la masse volumique du matériau de la pièce
$\lambda$ est la conductibilité thermique de ce matériau, et
Cp est la chaleur spécifique de ce matériau.

Aussi, pour ne pas dépasser des épaisseurs fondues de 0,5mm, la vitesse doit se situer dans la gamme allant de 1,5 à 50m/min.

Dans ce procédé, la puissance du plasma est également choisie pour ne pas dépasser une épaisseur fondue de 0,5mm et pour ne pas obtenir un grossissement des grains important.

Ceci peut être obtenu en utilisant des puissances telles qu'elles satisfont la relation suivante :

$$\frac{UI}{vd} \geq 10^7 \ W.s.m^{-2}$$

dans laquelle U est la tension appliquée à la torche à plasma (en V), I est l'intensité du courant (en A), v est la vitesse relative torche-pièce (en m/s), et d est le diamètre du spot (en m).

Généralement, on dépose sur la pièce à recharger plusieurs cordons de soudure juxtaposés avec recouvrement partiel des cordons ou plus souvent un cordon en spirale avec recouvrement partiel des spires pour former sur la pièce un dépôt de largeur voulue.

Dans ce cas, les cordons ou les spires ont généralement une largeur inférieure à 2mm.

Pour réaliser ces cordons ou spires de très faible largeur, on concentre l'énergie du plasma sur une zone de très faible diamètre, ce qui permet de réaliser facilement la fusion superficielle de la pièce et du matériau de revêtement en utilisant une vitesse relative élevée de déplacement du plasma par rapport à la pièce. De la sorte, l'énergie apportée sur la surface de la pièce peut être dissipée facilement par celle-ci.

Par ailleurs, le fait de réaliser le dépôt sous la forme de cordons ou spires juxtaposés permet de limiter la surépaisseur de dépôt et d'économiser le matériau de revêtement.

En outre, le confinement très important de l'arc électrique dans la tuyère dont le diamètre est inférieur à 2mm, conduit à de très hautes densités d'énergie (plus de 30A/mm$^2$), ce qui permet d'atteindre des vitesses relatives torche-pièce supérieures à 3,5m/min et d'obtenir des caractéristiques métallurgiques excellentes au niveau de la zone affectée thermiquement qui n'excède pas 0,5mm, et au niveau des structures de dépôt qui sont extrêmement fines.

D'autres caractéristiques et avantages de l'invention apparaîtront mieux à la lecture de la description qui suit d'un exemple de réalisation donné bien entendu à titre illustratif en référence au dessin annexé sur lequel

- la figure 1 représente de façon schématique une installation de rechargement d'une soupape conforme à l'art antérieur,
- la figure 2 représente la forme du dépôt obtenu avec la figure 1,
- la figure 3 représente une installation de rechargement conforme à l'invention,
- la figure 4 représente la forme du dépôt obtenu avec l'installation de la figure 3, et
- les figures 5 et 6 sont des micrographies représentant respectivement la structure de la zone affectée thermiquement dans des pièces revêtues selon le procédé de l'invention et selon le procédé de l'art antérieur.

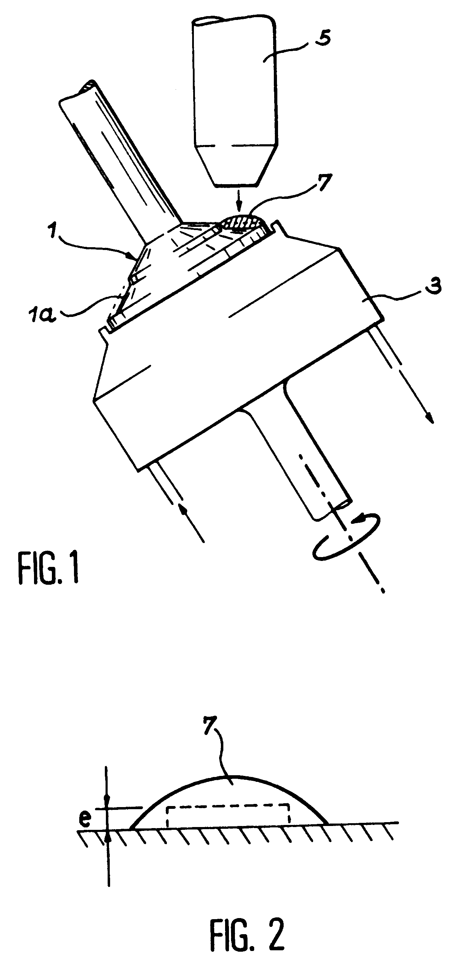

Sur la figure 1, on a représenté de façon très schématique, une installation de rechargement comprenant la pièce 1 à recharger, le support 3 de la pièce en cours de rechargement et la torche à plasma 5 utilisée pour ce rechargement.

Dans cet exemple, la pièce 1 est constituée par une soupape de moteur d'un diamètre de 34mm, qui présente une gorge 1a de forme arrondie dans laquelle on dépose le matériau de revêtement 7 constitué généralement par un dépôt à base de cobalt.

Pour effectuer ce revêtement, on utilise la torche à plasma à arc transféré 5, et les conditions suivantes de dépôt :

- diamètre de tuyère : 3mm,
- intensité : 120A
- tension : 30V
- vitesse de rotation du support 3 : 10 t/min,
- vitesse relative torche-pièce : 1,06m/min
- poids déposé : 7g par soupage, et
- temps de dépôt : 15s par soupape.

Pour ce dépôt, on fait tourner la soupape 1 sur le support 3 refroidi intérieurement par circuLation d'eau pour déposer dans la gorge 1a un cordon de soudure 7 de forme arrondie. L'énergie amenée par le plasma sur la surface de la pièce 1 provoque un échauffement très important de celle-ci qui est refroidie par le support 3.

Sur la figure 2, on a représenté la forme du cordon de soudure obtenu. Sur cette figure, on voit que le cordon de soudure 7 présente au milieu une surépaisseur importante par rapport à l'épaisseur *e* requise pour le dépôt.

Sur la figure 1, on remarque, par ailleurs, que la surface destinée à être recouverte du matériau de rechargement présente un profil particulier qui a dû être réalisé par usinage avant l'opération de dépôt, pour tenir compte de la forme du cordon de soudure et maintenir le matériau d'apport en fusion.

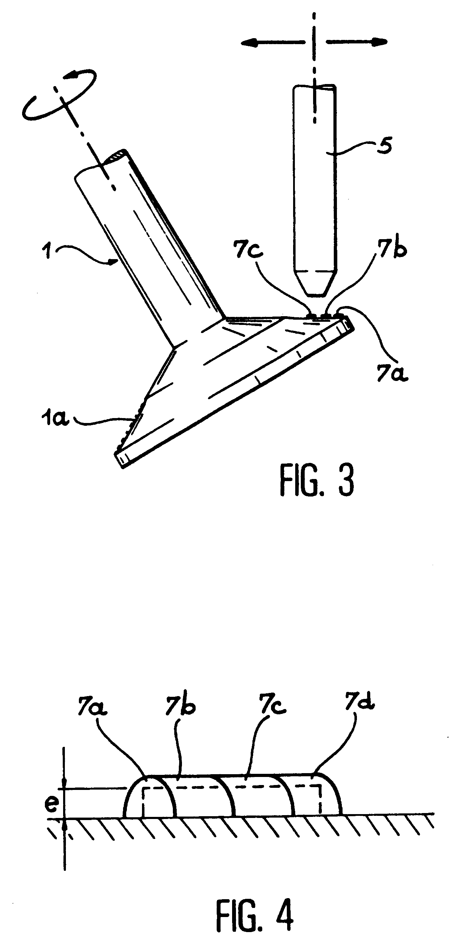

Sur la figure 3, on a représenté une installation de rechargement utilisant le procédé de l'invention.

Sur cette figure, la soupape 1 est entraînée en rotation par un dispositif approprié sans être disposée sur une table de refroidissement 3, et elle présente une surface 1a à recouvrir de matériau.

Sur cette surface, on réalise un cordon de soudure formé de spires 7a, 7b, 7c en déplaçant la torche à plasma 5 pour réaliser un cordon en spirale avec recouvrement partiel des spires, en opérant dans les conditions suivantes :

- diamètre de tuyère : 1,5mm
- diamètre du spot : 2,3mm
- intensité (I) : 60A
- tension (U) 30V
- vitesse de rotation : 33t/min
- vitesse relative torche-pièce (v) : 3,52m/min
- poids déposé par soupape : 2g
- temps de dépôt : 9s par soupape.

Le dépôt obtenu présente le profil représenté sur la figure 4. Sur cette figure, on voit que la réalisation d'un cordon de soudure en spirale permet de limiter fortement, par exemple à 0,1mm la surépaisseur de matériau déposé par rapport à l'épaisseur voulue $\underline{e}$ et de réaliser ainsi une économie de matériau et d'usinage ultérieur.

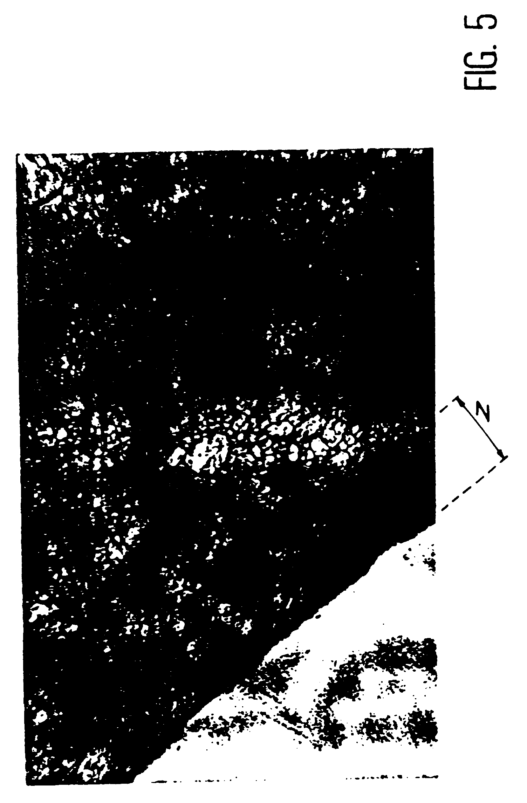

Par ailleurs, l'épaisseur de la zone fondue sur la pièce $\underline{p}$ est de 0,17mm et le grossissement des grains dans la zone affectée thermiquement Z n'excède pas 10% comme on peut le voir sur la figure 5 annexée.

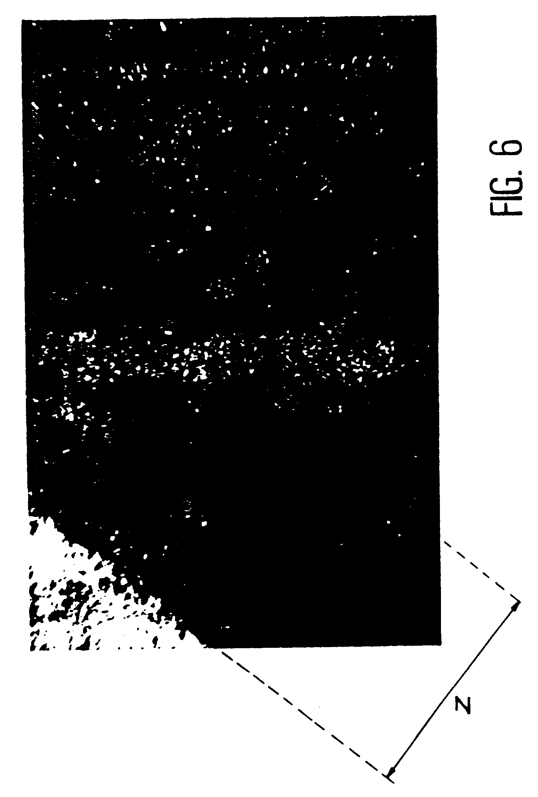

Sur la figure 6, on a représenté à titre comparatif la structure de la pièce obtenue avec la torche à plasma conformément à l'art antérieur et l'on constate que le grossissement des grains dans la zone affectée thermiquement Z est beaucoup plus important dans ce cas.

Dans cet exemple décrit ci-dessus, la puissance du plasma UI est de 1800W et le rapport $\frac{UI}{vd}$ est égal à $1,349.10^{-7}.W\,s/m^2$.

## Revendications

1. Procédé de rechargement d'une pièce métallique (1) par dépôt d'un matériau au moyen d'un plasma à arc transféré, le procédé consistant à déposer sur la pièce (1) à recharger plusieurs cordons de soudure (7a, 7b, 7c) dudit matériau juxtaposés avec recouvrement partiel des cordons ou un cordon en spirale dudit matériau avec recouvrement partiel des spires pour former sur la pièce un dépôt de largeur voulue, le dépôt étant effectué uniquement au moyen du plasma à arc transféré (5), en déplaçant le plasma par rapport à la pièce à une vitesse de 1,5 à 50 m/min et en utilisant une puissance du plasma telle qu'on fonde la surface de la pièce sur une épaisseur au plus égale à 0,5 mm et que le grossissement des grains dans la zone fondue n'excède pas 10%, sans refroidir la pièce au cours du rechargement.

2. Procédé selon la revendication 1, caractérisé en ce que la pièce est une soupape et en ce que chaque cordon de soudure ou chaque spire a une largeur inférieure à 2 mm.

3. Procédé selon l'une quelconque des revendications 1 et 2, caractérisé en ce que la puissance du plasma satisfait à la relation suivante :

$$\frac{UI}{vd} \geq 10^7 \, W.s.m^{-2}$$

dans laquelle U est la tension appliquée à la torche à plasma en V, I est l'intensité du courant en A, v est la vitesse relative torche-pièce en m/s, et d est le diamètre du spot en m.

## Claims

1. Process for recharging a metal part (1) by the deposition of a material by means of a plasma transferred arc consisting of depositing on the part (1) to be recharged several weld beads (7a, 7b, 7c) of said material juxtaposed with a partial overlap of the beads or a spiral bead with a partial overlap of the turns in order to form on the part a deposit having the desired width, deposition taking place solely by means of a plasma transferred arc (5), by displacing the plasma with respect to the part at a speed of 1.5 to 50 m/min and using a plasma power such that the surface of the part is melted over a thickness at the most equal to 0.5 mm and that the enlargement of the grains in the melted area does not exceed 10%, without cooling the part during recharging.

2. Process according to claim 1, characterized in that the part is a valve and in that each weld bead or each turn has a width below 2 mm.

3. Process according to either of the claims 1 and 2, characterized in that the power of the plasma satisfies the following relation:

$$\frac{UI}{vd} \geq 10^7 \, W.s.m^{-2}$$

in which U is the voltage applied to the plasma torch in V, I is the intensity of the current in A, v is the relative torch-part speed in m/s and d is the diameter of the spot in m.

## Patentansprüche

1. Verfahren zum Auftragschweißen an einem metallischen Werkstück (1) durch Auftragen eines Materials mittels eines Plasmas mit übertragenem Lichtbogen, wobei das Verfahren darin besteht, auf dem Werkstück (1) mehrere Schweißnähte (7a, 7b, 7c) aus besagtem Material nebeneinander mit partieller überdeckung der Schweißnähte aufzutragen oder eine spiralförmige Schweißnaht aus diesem Material mit partieller überdeckung der Windungen, um auf dem Werkstück einen Auftrag mit der gewünschten Breite zu bilden, wobei der Auftrag nur durch Plasma mit übertragenem Lichtbogen (5) ausgeführt wird, indem das Plasma in bezug auf das Werkstück mit einer Geschwindigkeit von 1,5 bis 50 m/min verschoben wird und indem eine derartige Plasmaleistung benutzt wird, daß die Oberfläche des Werkstücks auf eine Dicke von höchstens gleich 0,5mm schmilzt und die Kornvergröberung in der geschmolzenen Zone 10% nicht überschreitet, ohne das Werkstück im Laufe des Auftragschweißens zu kühlen.

2. Verfahren nach Anspruch 1, dadurch gekennzeichnet, daß das Werkstück ein Ventil ist und daß jede Schweißnaht oder jede Windung eine Breite unter 2mm hat.

3. Verfahren nach einem der Ansprüche 1 und 2, dadurch gekennzeichnet, daß die Leistung des Plasmas folgende Gleichung befriedigt:

$$\frac{UI}{vd} \geq 10^{7} W.s.m^{-2}$$

in der U die an den Plasmabrenner gelegte Spannung ist, I die Stromstärke in A ist, v die relative Geschwindigkeit Brenner-Werkstück ist und d der Durchmesser des Spots bzw. Flecks in m ist.

FIG. 1

FIG. 2

FIG. 3

FIG. 4

FIG. 5

FIG. 6